# EUROPEAN PATENT APPLICATION

(11) **EP 0 721 183 A2**
(43) Date of publication of application: **10.07.1996**
(21) Application number: 96400027.7
(22) Date of filing: 05.01.1996
(51) Int. Cl.: G11B 15/473

(54) **Servo control apparatus for video cassette tape recorder**

(30) Priority: 07.01.1995 KR 9500217
(71) Applicant: LG ELECTRONICS INC., Seoul (KR)
(72) Inventor: Oh, Young G., Sungnam, Kyungki-Do (KR)
(74) Representative: Fort, Jacques

(57) **Abstract**

An improved servo control apparatus for a VCR capable of minimizing jitter caused in a reproducing mode of the VCR by detecting a duty error of a horizontal synchronous signal and controlling the rotation speed of a drum motor using the thusly detected duty error, which includes first and second pulse shaping units for shaping a phase detection signal and a speed detection signal which are detected in accordance with the rotation of a motor; a speed error detector for detecting a speed error of the motor in accordance with a speed detection signal outputted from the first and second pulse shaping units and for filtering the thusly detected error; a phase error detector for detecting a phase error of the motor in accordance with a phase detection signal outputted from the first and second pulse shaping units and for filtering the thusly detected error; a jitter reducing unit for detecting a duty error by separating a synchronous signal from a reproduced picture signal and for outputting an assistant value signal of a speed control so as to control the speed of the motor in accordance with a detected duty error; a speed/phase control value adder for outputting a driving control signal of the motor in accordance with output signals of the speed error detector, the jitter reducing unit, and the phase error detector; and a motor controller for controlling the motor in accordance with a signal outputted from the speed/phase control value adder.

## Description

### BACKGROUND OF THE INVENTION

### 1. Field of the Invention

The present invention relates to a servo control apparatus for a video cassette tape recorder (VCR), and in particular to an improved servo control apparatus for a VCR capable of minimizing jitters caused in a reproducing mode of the VCR by detecting a duty error of a horizontal synchronous signal and controlling the rotation speed of a drum motor using the thusly detected duty error.

### 2. Description of the Conventional Art

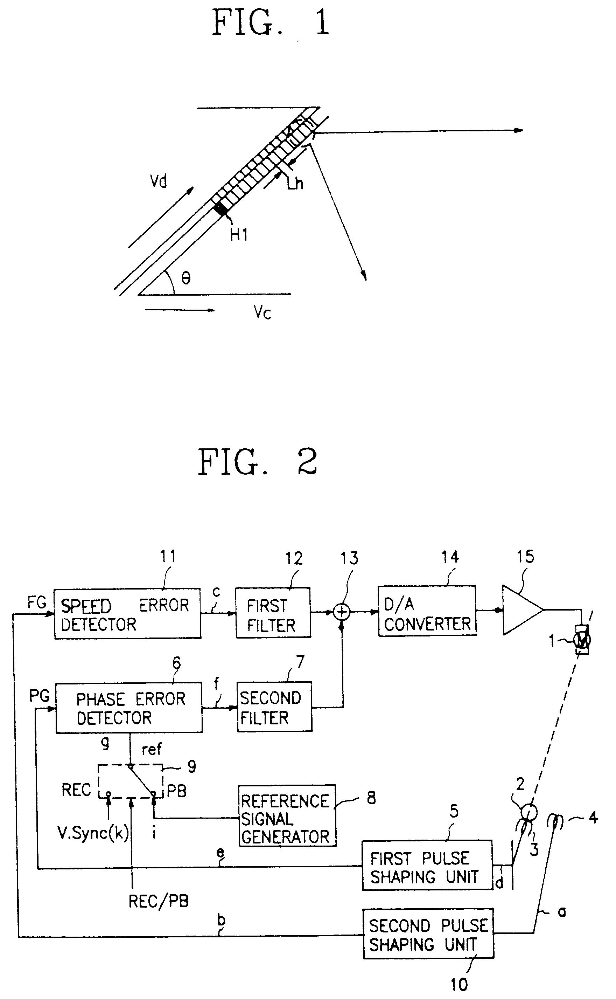

Generally, as well known to those who skilled in the art, the servo control system of VCR is classified into a drum servo for controlling a drum motor and a capstan servo for controlling a capstan motor. The capstan servo system is directed to transferring tape in a horizontal direction with a vector Vc, and the drum servo system is directed to controlling the rotation of the drum which rotates at a certain angle about a tape surface. Fig. 1 shows a video tape track which is caused by the tape run by the capstan servo system and the drum which is controlled by the drum servo system.

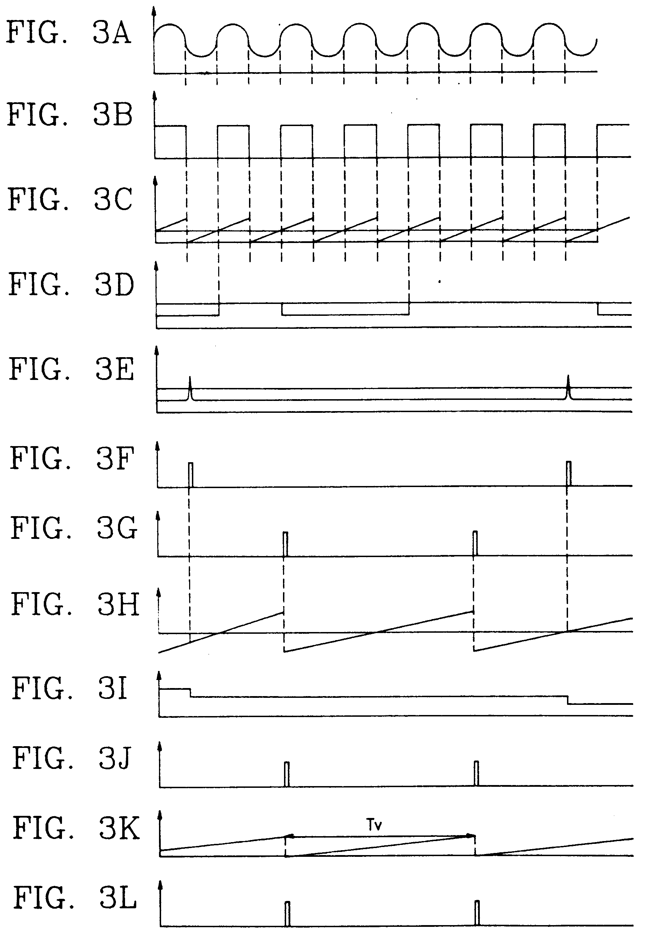

Fig. 2 shows a conventional servo. The control loop thereof is as follows. That is, the drum motor 1 is driven by a driving force of a drum motor driving unit 15. A magnetic sensor 4 detects the number of the motor with a rotary 2. As shown in Fig. 3A, a certain detection signal FG which corresponds to the rotation of the drum is outputted and converted int to a certain wave form as shown in Fig. 3B in cooperation with a second pulse shaping unit 10 and outputted to a speed error detector 11. The speed error detector 11, as shown in Fig. 3C, resets a counter at a leading edge of a detection signal Fg of the number of the drum rotation and outputs a certain value corresponding to the leading edge, and then the wave form, as shown in Fig. 3C is obtained. The thusly detected speed error is inputted to a speed/phase control value adder 13 through a first filter 12, and the output signal thereof is converted into an analog signal through a D/A converter 14 and is outputted to a drum motor driving unit 15. The drum motor driving unit 15 outputs a driving output corresponding to the input signal and the drum motor 1 is driven.

Meanwhile, regarding the phase control loop of the drum, a magnetic sensor 3 which is directed to detecting the phase of the drum motor 1 outputs a pulse with respect to the rotation as shown in Fig. 3E in accordance with the rotation of the drum motor 1, and the phase detection signal PG outputted from the magnetic sensor 3 is converted into a rectangular wave form as shown in Fig. 3F and outputted to the phase error detector 6. The phase error detector 6 receives the output of the first pulse shaping unit 5 and a reference signal ref as shown in Fig. 3G which is outputted from a switch 9 and performs a certain count operation. That is, the phase error detector counts the output signal of the first pulse shaping unit 5 and resets the current count value whenever a reference signal Vref is inputted thereto, and counts the output signal of the first pulse shaping unit 5 and outputs the count value as a phase error signal "f". The reference signal ref of the phase error detector 6 varies in accordance with a recording mode or a reproducing mode. In a recording mode, a vertical synchronous signal Vsync is inputted as a reference signal ref, and in a reproducing mode a signal "i" outputted from the reference signal generator 8 is inputted as a reference signal.

The switch 9 is switched in accordance with a reproducing mode signal PB and a recording mode signal REC outputted from a system controller (not shown) and determines a reference signal which is applied to the phase error detector. The reference signal generator 8 includes a free run counter having a cycle Vsync of Tv as shown in Fig. 3K and outputs a reproducing reference pulse "i" when an overflow occurs by the counter.

The phase error signal "f" outputted from the phase error detector 6 is outputted to the speed/phase control value adder 13 through the second filter 7 and added by the speed control value outputted from the first filter 12 and converted into an analog value by the D/A converter 14, and thusly converted analog voltage is amplified by the drum motor driving unit 15 for driving the drum motor 1.

Although the drum and capstan are accurately controller using the above-described control loops, in case that a tape recorded by a certain VCR set is reproduced by another VCR set, jitters occurs because of the following reasons: First, the surface of the drum differs by the VCR set. Second, a load is different from the load of the tape running mechanism. Third, the speed difference of the drum and the speed difference of the capstan differ from each other due to the speed detection error and the phase detection error which occur by each VCR set.

The above-mentioned differences occur due to the difference between the horizontal synchronous signals of the video signal on the tape at the time of recording by the video head H1 of the drum.

Therefore, apparatuses such as a time base corrector for resolving the above-mentioned problems are introduced in the industry. The apparatus is directed to minimizing jitters of the picture using memory. However, since the apparatus requires additional memory, fabrication cost is high.

### SUMMARY OF THE INVENTION

Accordingly, it is an object of the present invention to provide a servo control apparatus for a VCR, which overcome the problems encountered in a conventional servo control apparatus for a VCR.

It is another object of the present invention to provide an improved servo control apparatus for a VCR capable of minimizing jitter caused in a reproducing mode of the VCR by detecting a duty error of a horizontal synchronous signal and controlling the rotation speed of a drum motor using the thusly detected duty error.

To achieve the above objects, there is provided a servo control apparatus for a VCR, which includes first and second pulse units for shaping a phase detection signal and a speed detection signal which are detected in accordance with the rotation of a motor; a speed error detector for detecting a speed error of the motor in accordance with a speed detection signal outputted from the first and second pulse shaping units and for filtering the thusly detected error; a phase error detector for detecting a phase error of the motor in accordance with a phase detection signal outputted from the first and second pulse shaping units and for filtering the thusly detected error; a jitter reducing unit for detecting a duty error by separating a synchronous signal from a reproduced picture signal and for outputting an assistant value signal of a speed control so as to control the speed of the motor in accordance with a detected duty error; a speed/phase control value adder for outputting a driving control signal of the motor in accordance with output signals of the speed error detector, the jitter reducing unit, and the phase error detector; and a motor controller for controlling the motor in accordance with a signal outputted from the speed/phase control value adder.

### BRIEF DESCRIPTION OF THE DRAWINGS

Fig. 1 is a schematic view of a video tape track in the prior art.

Fig. 2 is a block diagram of a drum servo control system of a conventional VCR.

Figs. 3A through 3L are wave forms of each element of Fig 2.

Fig. 4 is a block diagram of a servo control apparatus for a VCR of a first embodiment according to the present invention.

Fig. 5 is a circuit diagram of a horizontal synchronous error detector of Fig. 4 according to the present invention.

Figs. 6A through 6L are wave forms of each element of Figs. 4 and 5 according to the present invention.

Figs. 7A through 7D are wave forms a duty detector of Fig. 5 according to the present invention.

Fig. 8 is a block diagram of a servo control apparatus for a VCR of a second embodiment according to the present invention.

Fig. 9 is a circuit diagram of a horizontal synchronous error detector of Fig. 8 according to the present invention.

### DETAILED DESCRIPTION OF THE INVENTION

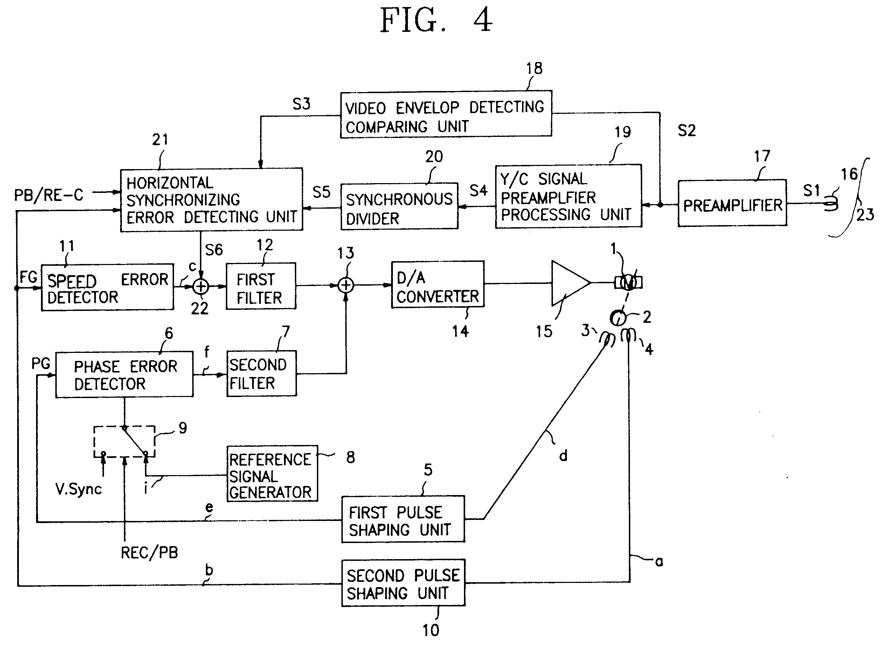

Fig. 4 shows a servo control apparatus for a VCR of a first embodiment according to the present invention, which includes magnetic sensor 3 and 4 for detecting phase and the number of the drum motor 1, first and second pulse shaping units 5 and 10 for amplifying a phase detection signal and a drum rotation detection signal outputted from the magnetic sensors 3 and 4, a phase error detection unit 6 and a speed error detection unit 11 for detecting the phase error and the speed error in accordance with a phase detection signal PG and a drum rotation detection signal outputted from the first and second pulse shaping units 5 and 10, respectively, a speed/phase control value adder 13 for adding the output signals of the phase error detector 6 and the phase error detector 6 and converting into a speed/phase control value, a D/A converter 14 for converting the digital signal outputted from the speed/phase control value adder 13 into an analog signal, a video head 16 for reading a picture high frequency signal S1 from a video tape 23 wherein a servo system includes a drum motor driving unit 15 which outputs a driving signal of the drum motor 1 corresponding to the output signal of the D/A converter 14, a preamplifier 17 for amplifying the output picture signal of the video head 16 into a certain level, a detection comparing unit 18 for detecting whether the picture signal is present in accordance with an output signal of the preamplifier 17, a luminance/color signal processing unit 19 for receiving the output signal of the preamplifier 17 and for processing the luminance/color signals, a synchronous separator 20 for receiving a picture signal outputted from the luminance/color signal processing unit 19 and for separating a combined synchronous signal therefrom, a horizontal synchronous error detector 21 for separating the horizontal synchronous signal from the combined synchronous signal and for outputting an assistant vale signal of the speed control by computing a duty difference of the horizontal synchronous signal using a none-or-existing judging signal, a rotation detection signal FG, and reproducing/recording mode signals PB/REC outputted from the picture envelop detection comparing unit 18, and an adder 22 for adding the speed error outputted from the speed error detector 11 and the assistant value signal of the speed control outputted from the horizontal synchronous error detector 21.

The operation and effects of the servo control apparatus for a VCR of a first embodiment according to the present invention will now be explained with reference to the accompanying drawings.

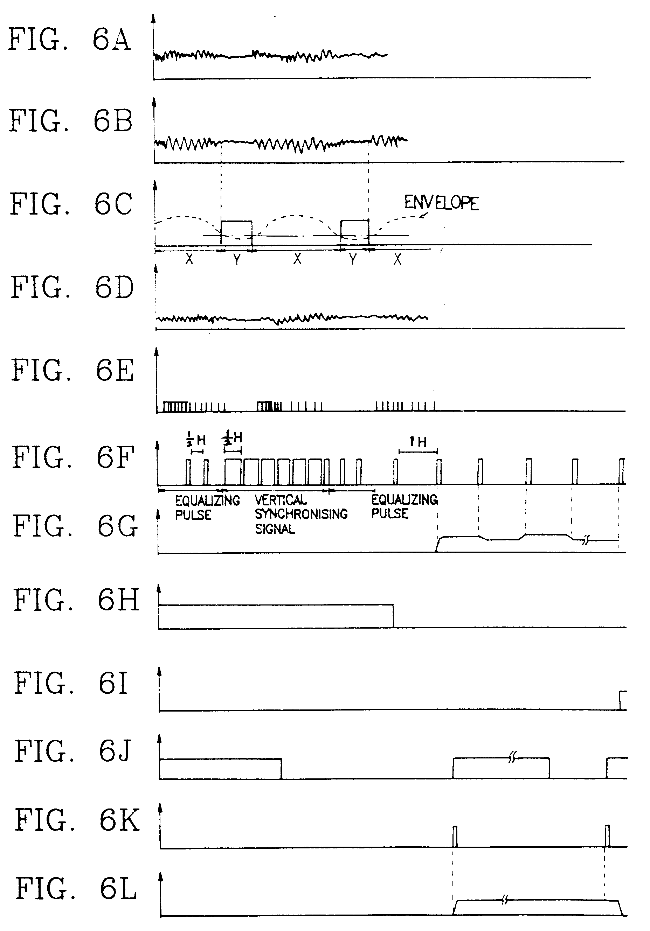

To begin with, a picture high frequency signal S1, as shown in Fig. 6A, is reproduced from the video tape 23 wherein the video tape 23 is loaded onto the video head, and is amplified to a certain level as shown in Fig. 6B, and is outputted to the picture envelop detection comparing unit 18 and to the luminance/color signal processing unit 19. The picture envelop detection comparing unit 18 filters the input picture signal S2 in a low pass filtering method and a parabola-like wave form as shown in Fig. 6C is obtained. This parabola-like wave form is compared with the reference voltage Vref by the operation amplifier of the picture envelop detection comparing unit 18, and a low signal is outputted therefrom in a certain range larger than that of the reference voltage Vref, and a high signal is outputted in a certain range smaller than that of the reference voltage Vref. As a result, the wave form of a signal outputted from the picture envelope detection comparing unit 18 is shown in Fig. 6C. Here, the low range denotes a range in which a picture signal is present, and the high range denotes a range in which a picture signal is not present.

In addition, the luminance/color signal processing unit 19 processes the input picture signal in a luminance/color processing method and generates a picture signal (S3) as shown in Fig. 6D, and is applied to the synchronous separator 20 and the synchronous separator 20 outputs a combined synchronous signal Csyn (S5) as shown in Fig. 6E.

The horizontal error detector 21 separates the horizontal synchronous signal Hsync from the combined synchronous signal (S5) outputted from the synchronous separator 20 and computes a duty difference of the horizontal synchronous signal Hsync using a picture judging signal (S3) outputted from the picture envelop detection comparing unit 18, a speed detection signal b:FG of the drum motor 1 outputted from the second pulse shaping unit 10, and a reproducing/recording mode signal PB and REC and supplies to the adder 22 as an assistant value signal (S6) of the speed control.

Therefore, the adder 22 adds the assistant value signal (S6) and the output signal C of the speed error detector 11 and outputs the sum thereof, and the sum is added with the phase duty by the speed/phase control value adder 13 and is supplied to the driving amplifier 15 through the D/A convener 14, so that the speed of the drum motor 1 is controlled.

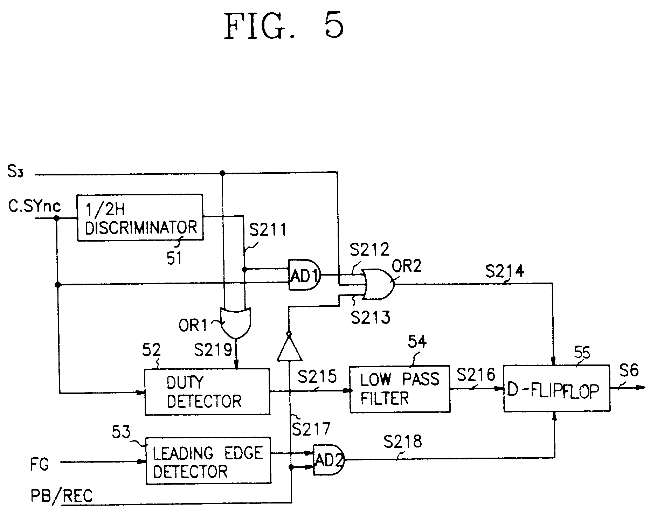

Meanwhile, Fig. 5 shows a horizontal synchronous error detector 21. The operation of the horizontal synchronous error detector 21 will now be explained.

A 1/2 H judging unit 41 receives a combined synchronous signal (S5) Csync outputted from the synchronous separator 20 and judges whether the signal is 1/2 or below the 1/2. At this time, when the duty of the horizontal synchronous signal Hsync below 47µsec of 75% of a first horizontal line 1H, the output signal S211 of the 1/2 H judging unit 51 is a high level on the basis that the duty of the horizontal synchronous signal Hsync is 63.5µsec in case of NTSC.

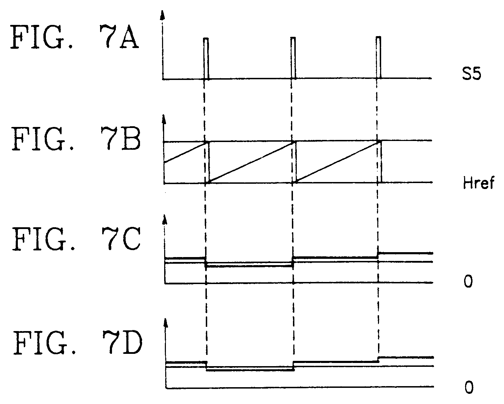

In addition, the combined synchronous signal Csync outputted from the synchronous separator 20 is applied to the duty detector 52, and the count value of the interior of the duty detector 52 is outputted at a leading edge of the combined synchronous signal Csync (S5), and the counter is reset at a decreasing edge, a signal as shown in Fig. 7B is outputted. The signal as shown in Fig. 7C outputted at a leading edge is outputted as a signal as shown in Fig. 7D through the subtractor, and a signal as shown in Fig. 6G is outputted. Here, the reference value Href is referred to a value corresponding to 63.5µsec (NTSC). The duty error signal (S215) of the horizontal synchronous signal Hsync is outputted from the duty detector 52, and is outputted to the flipflop D-FF (55) so as to synchronize with the drum speed detection signal FG outputted from the second pulse shaping unit 10 through the low pass filter 54.

In addition, a leading edge of the drum speed detection signal FG is detected through the leading edge detector 53 from a reproducing mode signal PB. The thusly detected signal and reproducing/recording mode signals PB and REC are ANDed by the AND gate AD2, and are supplied to the flipflop D-FF (55) as a clock signal S218 and synchronized with the drum speed detection signal FG. That is, at the time of controlling the speed, the duty error of the horizontal synchronous signal Hsync is supplied to the drum speed system.

In addition, the output signal S3 of the picture envelope detection comparing unit 18 and the output signal S211 of the 1/2 H judging unit 51 are ORed by the OR-gate OR1, and thusly ORed signal S219 is supplied to the duty detector 52 as a reset signal RESET, and the output signal S215 of the duty detector 52 becomes zero when the reset signal RESET is a high level.

In addition, the OR-gate OR2 receives a picture signal judging signal S3, a reverse signal REC MODE S213 of the recording/reproducing mode signal and an output signal S212 which is obtained by ANDing the output signal S211 of the 1/2 H judging unit 51 and the output signal S5 of the synchronous unit 20, and when of those one is a high level, the flipflop D-FF (55) is reset in accordance with the high level, and when there is no signal, the output of the flipflop D-FF (55) becomes zero at the equivalent pulse portion of the vertical synchronous signal. That is, a mask process is performed for preventing malfunction.

That is, the drum is controlled by adding he duty error due to the speed error and the horizontal synchronous signal Hsync in accordance with a drum speed detection signal FG at a leading edge of the DFG, that is, a point of controlling the speed, by detecting the duty of the horizontal synchronous signal Hsync, so that it is possible to reduce jitters with respect to the tape recorded by another VCR.

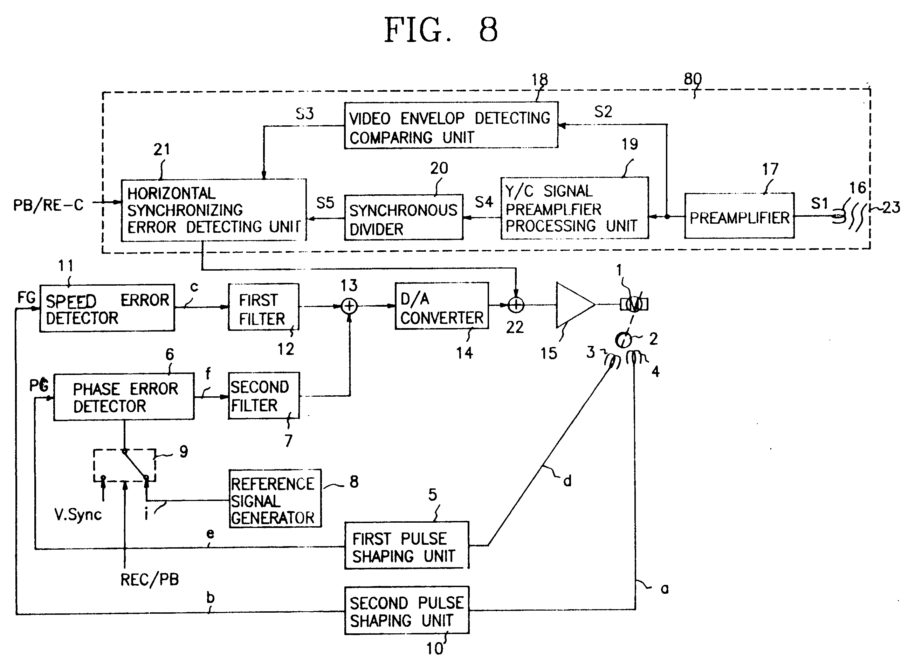

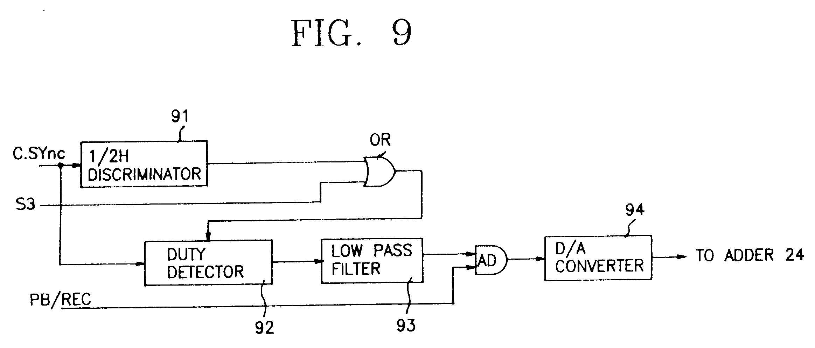

Meanwhile, Fig. 8 shows another embodiment of the present invention. As shown therein, the adder 22 of Fig. 4 is substituted by another adder 24 connected between the D/A converter 14 and the drum motor driving unit 15. The adder 24 is directed to adding the output signal of the D/A converter 14 and the output signal of the horizontal synchronous error detector 21 and outputs to the drum motor driving unit 15, so that it is possible to simply implement the purpose kf the horizontal synchronous error detector 21 of Fig. 9.

The operation of the above-mentioned embodiment will now be explained with reference to the accompanying drawings.

To begin with, different from the embodiment of Fig. 5, the drum speed detection signal FG is not applied. the reproducing/recording mode signals PB and REC is outputted to the AND-gate AD so as to output a duty error in only the reproducing mode. In addition, the duty error is detected using the 1/2 H judging unit 91 and the duty detector 92 and the thusly detected error is supplied to the AND-gate AD through the low pass filter 93. In addition, the duty error signal outputted from the AND-gate AD is converted into an analog signal by the D/A converter 94 and outputted to the adder 24. This embodiment is characterized to more improving compensation capacity with respect to jitters by inputting the jittering to the drum motor 1 without synchronizing to the DFG.

Although the preferred embodiment of the present invention have been disclosed for illustrative purposes, those skilled in the art will appreciate that various modifications, additions and substitutions are possible, without departing from the scope and spirit of the invention as described in the accompanying claims.

## Claims

1. A servo control apparatus for a VCR, comprising:
first and second pulse shaping units for shaping a phase detection signal and a speed detection signal which are detected in accordance with the rotation of a motor;
a speed error detector for detecting a speed error of said motor in accordance with a speed detection signal outputted from said first and second pulse shaping units and for filtering the thusly detected error;
a phase error detector for detecting a phase error of the motor in accordance with a phase detection signal outputted from the first and second pulse shaping units and for filtering the thusly detected error;
a jitter reducing unit for detecting a duty error by separating a synchronous signal from a reproduced picture signal and for outputting an assistant value signal of a speed control so as to control the speed of the motor in accordance with a detected duty error;
a speed/phase control value adder for outputting a driving control signal of the motor in accordance with output signals of said speed error detector, said jitter reducing unit, and said phase error detector; and
a motor controller for controlling the motor in accordance with a signal outputted from said speed/phase control value adder.

2. The apparatus of claim 1, wherein said jitter reducing unit includes:
a picture envelop detection comparing unit for scanning a high frequency picture signal reproduced from a video tape and for judging whether or not a picture signal is contained therein;
a luminance/color signal processing unit for processing a luminance/color signal by receiving said reproduced high frequency picture signal;
a synchronous separator for receiving a picture signal outputted from said luminance/color signal processing unit and separating a combined synchronous signal; and
a horizontal synchronous error detector for separating a horizontal synchronous signal from said combined synchronous signal and for detecting the duty difference of the horizontal synchronous signal using a speed detection signal and a reproducing/recording mode signal and for outputting a speed control assistant value signal to the speed/phase control value adder.

3. The apparatus of claim 2, wherein said speed/phase control value adder is directed to adding the output signal of the horizontal synchronous error detector and the output signal of the speed error detector and to adding the thusly added signal and the output signal of the phase error detector.

4. The apparatus of claim 3, wherein said horizontal synchronous error detector includes:
a 1/2 judging unit for comparing the duty of the horizontal synchronous signal with a reference signal and for outputting a judging signal;
a duty detector for detecting a duty of a combined synchronous signal;
a leading edge detector for detecting a leading edge of a drum speed detection signal;
a low pass filter for low-pass-filtering the output signal of said duty detector;
a flip-flop for synchronizing the output signal of said low pass filter to the drum speed detection signal;
a first OR-gate for ORing the output signal of said picture envelop detection comparing unit and the output signal of said 1/2 H judging unit and for supplying a reset signal of the duty detector;
a first AND-gate for ANDing a combined synchronous signal and the output signal of the 1/2 H judging unit;
a second OR-gate for outputting "zero" of said flipflop at an equivalent pulse portion of a vertical synchronous sinal when either a picture signal judging signal or a reversed signal of a reproducing/recording mode signal or an output signal of the AND-gate is a high level and there is no signal by resetting the flipflop; and
a second AND-gate for ANDing the output signal of the leading edge detector and a reproducing/recording mode signal and for outputting a clock signal of the flipflop.

5. The apparatus of claim 2, wherein said speed/phase control value adder is directed to adding the output signal of the speed error detector and the output signal of the phase error detector and to adding the thusly added signal and the output signal of the horizontal synchronous error detector.

6. The apparatus of claim 5, wherein said horizontal synchronous error detector includes:
a 1/2 judging unit for comparing the duty of the horizontal synchronous signal with a reference signal and for outputting a judging signal with respect thereto;
a duty detector for detecting a duty of a combined synchronous signal;
an OR-gate for ORing the output signal of said 1/2 judging unit and a picture signal judging signal and for outputting a control signal of the duty detector;
a low pass filter for low-pass-filtering the output signal of the duty detector;
an AND-gate for ANDing the output signal of a low pass filter and a reproducing/recording mode signal; and
a D/A converter for converting the digital signal outputted from the AND-gate into an analog signal.
